# EUROPÄISCHE PATENTSCHRIFT

(11) **EP 0 936 137 B1**
(45) Veröffentlichungstag und Bekanntmachung des Hinweises auf die Patenterteilung: **05.11.2003**
(21) Anmeldenummer: 99102327.6
(22) Anmeldetag: 06.02.1999
(51) Int. Cl.: B63C 7/10, B63G 8/24

(54) **Druckausgleich für Auftriebssäcke im Wasser**
Pressure compensation for flotation bags in water
Compensation de pression pour sacs de flottaison dans l'eau

(30) Priorität: 14.02.1998 DE 19806101
(43) Veröffentlichungstag der Anmeldung: 18.08.1999
(73) Patentinhaber: Diehl Stiftung & Co. KG, 90478 Nürnberg (DE)
(72) Erfinder: Schleicher, Ulrich, Dr., 91217 Hersbruck (DE)
(74) Vertreter: Diehl Patentabteilung

(56) Entgegenhaltungen:
- WO-A-97/17560
- BE-A- 470 543
- GB-A- 2 045 693
- US-A- 3 941 149
- US-A- 4 420 101
- US-A- 4 478 587
- US-A- 4 524 805
- US-A- 5 193 585
- US-A- 5 301 707
- US-A- 5 567 015

## Beschreibung

Die Erfindung bezieht sich auf eine Druckausgleichsvorrichtung für Körper im Wasser nach dem Oberbegriff des Anspruchs 1.

Die Erfindung geht von der BE 470 543 A aus. Diese beschreibt ein Ventil für einen Körper zum Druckausgleich. Das Ventil besteht aus einer elastischen Tülle und einem, mit dem Druckausgleichkörper verbindbaren Flansch. Die Tülle verläuft in ihrem Dichtabschnitt mit parallel aneinander anliegenden Flächen. Zur Überwindung der Sperrwirkung dieser Flächen ist ein verhältnismäßig großer Druck erforderlich, da zusätzlich die parallelen Dichtflächen durch einen ringförmigen Materialquerschnitt verstärkt ist.

Der Erfindung liegt die Aufgabe zugrunde, für Auftriebssäcke, die vollständig von Wasser umgeben sind, einen bei bereits kleiner Druckdifferenz von etwa 0,1 bar wirksamen Überdruckausgleich vorzusehen.

Die Erfindung löst dies Aufgabe entsprechend den erfindungsgemäßen Merkmal des Anspruchs 1.

Vorteilhafte Weiterbildungen der Erfindung sind den Unteransprüchen zu entnehmen.

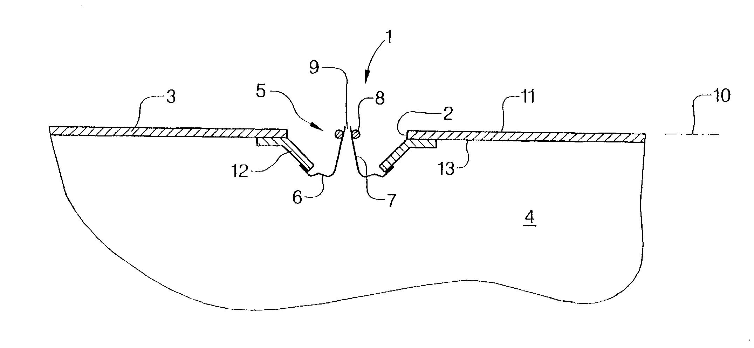

Ein Ausführungsbeispiel der Erfindung ist der einzigen Zeichnung zu entnehmen. Ein Ventil 1 ist in einer kreisrunden Öffnung 2 einer Sackwand 3 eines Auftriebssackes 4 einvulkanisiert.

Das erfindungsgemäße Ventil 1 ist eine Alternative für Ausgleichsventile aus Metall.

Das eigentliche Ventil 1 besteht aus einer, weich elastischen, etwa T-förmigen Tülle 5 mit einem gewellten Flansch 6, einem, nach außen sich konisch verengenden Trichter 7 und einem elastischen Ring 8. Der Ring 8 liegt nahe dem Auslaß 9 des Ventils 1. Der Auslaß 9 des Ventils 1 liegt bei aufgeblasenem Auftriebssack 4 in der Ebene 10, in de4r die Außenwand 11 der Sackwand 3 liegt. Der gewellt ausgebildete Flansch 6 ist randseitig mit einem, zum Trichter 7 gegenläufig verlaufenden Konushalter 12 durch Vulkanisation verbunden. Andererseits ist der Konushalter 12 mit der Innenwand 13 der Sackwand 3 durch Vulkanisation verbunden. Der Konushalter 12 besteht aus einem etwas weniger elastischen Material.

Die Wellung des Flansches 6 ermöglicht, daß das Ventil 1 bei äußeren Belastungen seitlich ausweichen kann. Außerdem ist durch die Wellung die Belastung des Ventils 1 bei den Lastwechselspielen des Ventils 1 gering.

Das konische Ende des Trichters 7 bildet an sich das Schließglied aufgrund der Kontraktion des elastischen Werkstoffs der Tülle 5. Unterstützt wird der Schließmechanismus durch den elastischen Ring 8. Der Ring 8 ist entweder ein integraler Teil des Trichters 7 oder er ist bspw. kraft- oder formschlüssig am Trichter 7 befestigt.

Die Tülle 5 kann auch durch Umformung der Sackwand 3 gebildet sein.

Durch eine Vielzahl von, in der Sackwand 3 angeordneten Ventilen 1 liegt - in der Summe gesehen - ein großer Strömungsquerschnitt vor, so daß der Innendruck des Auftriebssackes 4 rasch an das sich ändernde Druckverhältnis beim z.B. Aufsteigen des Auftriebssackes 4 anpaßbar ist.

Durch die Vielzahl der Ventile 1 ist auch gewährleistet, daß immer ausreichend viele Ventile 1 arbeiten, auch dann, wenn sich der Auftriebssack 4 irgendwo an eine Wand anlegen sollte.

Bei einer Erhöhung des Innendrucks des Auftriebssackes 4 werden durch den Aufbau des Ventils 1 sehr feinfühlig bereits kleine Druckdifferenzen von etwa 0,1 bar geregelt. Bei einer Erhöhung des Innendrucks wird der Auslaß 9 gegen die Kraft des elastischen Ringes 8 entsprechend aufgeweitet und das, im Auftriebssack 4 befindliche Medium, wie Druckgas, strömt durch die Vielzahl der Ventile 1 so lange aus, bis das Ventil 1 bzw. die Ventile 1 aufgrund der gesunkenen Druckdifferenz bzw. der Vorspannung des Auslasses 9 bzw. des Ringes 8 wieder schließen.

Die Ventile 1 sind sicher, einfach und praktisch wartungsfrei.

Die Erfindung ist für alle festen, halbfesten, elastischen Körper, wie Auftriebssäcke geeignet, bei denen die Druckdifferenz zwischen innen und außen von Bedeutung ist. So z.B. für aufblasbare Schotte zum Sperren von eindringendem Wasser in Zwischendecks von Fähren.

Die Körper können aus Metall, Kunststoff, Gummi, Textil bestehen.

## Patentansprüche

1. Druckausgleichsvorrichtung für Körper im Wasser, bei dem Ventile in der Wand bei Überdruck automatisch öffnen,
wobei die Ventile (1) aus einer elastischen Tülle (5) bestehen, deren Einlass mit dem Volumen des Körpers (4),
deren Auslaß (9) mit dem Umgebungsmedium des Körpers (4) in Verbindung bringbar ist,
der Auslaß (9) durch ein elastisches Schließglied (7) verschlossen ist,
und die Tülle (5) körperseitig einen mit dem Körper (4) verbindbaren Flansch (6) aufweist,
**gekennzeichnet durch** einen Konushalter (12) aus festerem Material, der mit der Innenwand (13) des Körpers (4) und mit dem Flansch der Tülle (5) verbindbar ist.

2. Druckausgleich nach Anspruch 1,
**dadurch gekennzeichnet,**
**dass** das Schließglied (7) durch einen elastischen Ring (8) verstärkt ist.

3. Druckausgleich nach Anspruch 1,
**dadurch gekennzeichnet,**
**dass** der Flansch (6) gewellt ist.

4. Druckausgleich nach einem der vorhergehenden Ansprüche,
**dadurch gekennzeichnet,**
**dass** die Tülle (5) durch Umformung der Sackwand (3) eines Auftriebssackes (4) gebildet ist.

5. Druckausgleich nach einem der vorhergehenden Ansprüche,
**dadurch gekennzeichnet,**
**dass** die separat gefertigte Tülle (5) in einer Öffnung (2) der Sackwand (3) eines Auftriebssackes (4) eingesetzt und mit der Sackwand (3) verbunden ist.

6. Druckausgleich nach Anspruch 1,
**dadurch gekennzeichnet,**
**dass** die Tülle (5) einen nach außen sich verjüngenden Trichter (7) aufweist.

7. Druckausgleich nach einem der vorhergehenden Ansprüche,
**dadurch gekennzeichnet,**
**dass** der Auslaß (9) der Tülle (5) in der Ebene (10) der Außenwand (11) oder darunter liegt.

8. Druckausgleich nach Anspruch 4,
**dadurch gekennzeichnet,**
**dass** die Ventile (1) in der Sackwand (3) integriert und über den Auftriebssack (4) verteilt angeordnet sind.

## Claims

1. Pressure-equalizing device for bodies in the water, in which valves in the wall automatically open with overpressure,
the valves (1) each consisting of an elastic nozzle (5), of which the inlet can be brought into contact with the volume of the body (4),
and the outlet (9) can be brought into contact with the ambient medium of the body (4),
the outlet (9) being sealed by an elastic closing member (7),
and the nozzle (5), on the body side, having a flange (6) which can be connected to the body (4),
**characterized by** a conical holder (12) made of firmer material which can be connected to the inner wall (13) of the body (4) and to the flange of the nozzle (5).

2. Pressure equalization according to Claim 1,
**characterized in that**
the closing member (7) is reinforced by an elastic ring (8).

3. Pressure equalization according to Claim 1,
**characterized in that**
the flange (6) is corrugated.

4. Pressure equalization according to one of the preceding claims,
**characterized in that**
the nozzle (5) is formed by deformation of the wall (3) of a buoyancy bag (4).

5. Pressure equalization according to one of the preceding claims,
**characterized in that**
the separately manufactured nozzle (5) is inserted into an opening (2) in the wall (3) of a buoyancy bag (4) and is connected to the bag wall (3).

6. Pressure equalization according to Claim 1,
**characterized in that**
the nozzle (5) comprises an outward-tapering funnel (7).

7. Pressure equalization according to one of the preceding claims,
**characterized in that**
the outlet (9) of the nozzle (5) lies in or below the plane (10) of the outer wall (11).

8. Pressure equalization according to Claim 4,
**characterized in that**
the valves (1) are integrated in the bag wall (3) and are disposed in such a way as to be distributed over the buoyancy bag (4).

## Revendications

1. Dispositif d'équilibrage de pression pour des corps dans l'eau, dans lequel des soupapes situées dans la paroi s'ouvrent automatiquement, les soupapes (1) étant constituées d'une douille élastique (5) dont l'entrée peut être mis en liaison avec le volume du corps (4) et la sortie (9) avec le milieu environnant du corps (4), la sortie (9) étant fermée par un organe d'obturation élastique (7) et la douille (5) présentant du côté du corps une bride (6) pouvant être reliée au corps (4), **caractérisé par** un support conique (12) en matériau rigide qui peut être relié à la paroi interne (13) du corps (4) et à la bride de la douille (5).

2. Dispositif selon la revendication 1, **caractérisé en ce que** l'organe d'obturation (7) est renforcé par une bague élastique (8).

3. Dispositif selon la revendication 1, **caractérisé en ce que** la bride (6) est ondulée.

4. Dispositif selon la revendication 1, **caractérisé en ce que** la douille (5) est obtenue par déformation de la paroi du sac (3) d'un sac flottant (4).

5. Dispositif selon l'une des revendications précédentes, **caractérisé en ce que** la douille (5) fabriquée séparément est introduite dans une ouverture (2) de la paroi (3) d'un sac flottant (4) et reliée à la paroi (3) du sac.

6. Dispositif selon la revendication 1, **caractérisé en ce que** la douille (5) présente un entonnoir (7) se rétrécissant vers l'extérieur.

7. Dispositif selon l'une des revendications précédentes, **caractérisé en ce que** la sortie (9) de la douille(5) se situé dans le plan (10) de la paroi extérieure (11) ou au-dessous.

8. Dispositif selon la revendication 4, **caractérisé en ce que** les soupapes (1) sont intégrées dans la paroi (3 du sac et sont réparties sur le sac flottants.
